# EUROPÄISCHE PATENTANMELDUNG

(11) **EP 2 946 860 A1**
(43) Veröffentlichungstag der Anmeldung: **25.11.2015**
(21) Anmeldenummer: 14168923.2
(22) Anmeldetag: 20.05.2014
(51) Int. Cl.: B23B 47/34, B23B 51/06, B25D 17/02, B23Q 11/00, B23Q 17/00

(54) **Absaugvorrichtung**

(71) Anmelder: HILTI Aktiengesellschaft, 9494 Schaan (LI)
(72) Erfinder: Appel, Hans, 81377 München (DE)
(74) Vertreter: Hilti Aktiengesellschaft Corporate Intellectual Property

(57) **Zusammenfassung**

Eine Absaugvorrichtung hat ein Gebläse **23,** einen Ansaugkopf **26,** einen Kanal **19** von dem Ansaugkopf **26** zu dem Gebläse **23,** einen Staubfilter **24** und einen Sammelbehälter **25** für den an dem Staubfilter **24** abgeschiedenen Staub. Der Ansaugkopf hat einen um eine Arbeitsachse **13** angeordneten rohrförmigen Hohlraum **28** zum Aufnehmen des Anschlussabschnitts **21** des Saugbohrers **4.** In dem Hohlraum **28** ist ein Strömungssensor **37** angeordnet, der eine der Arbeitsachse **13** zugewandte Sensorfläche **44** hat und zum Ausgeben eines Messsignals 41 ist, das indikativ für einen auf die Sensorfläche **44** auftreffenden Luftstrom ist. Eine Auswertungseinrichtung **38** gibt ein Fehlersignal **42** ansprechend auf das Messsignal **41** aus, wenn das Messsignal **41** für wenigstens eine vorgegebene Dauer (T) geringer als ein Schwellwert **43** ist, und unterdrückt das Fehlersignal **42,** wenn das Messsignal **41** den Schwellwert **43** innerhalb der vorgegebenen Dauer (T) überschreitet. Eine Signalisierungseinrichtung zeigt **39** das Fehlersignal **42** einem Anwender an.

## Beschreibung

### GEBIET DER ERFINDUNG

Die vorliegende Erfindung betrifft eine Absaugvorrichtung für einen Saugbohrer.

US 2013/0136549 beschreibt eine Absaugvorrichtung für Saugbohrer. Die Absaugvorrichtung saugt die staubbeladene Luft von dem Saugbohrer an. Ein Filter scheidet den Staub in einen Sammelbehälter ab.

### OFFENBARUNG DER ERFINDUNG

Die erfindungsgemäße Absaugvorrichtung ist für einen Saugbohrer ausgelegt, der einen hohlen Schaft und an einem Anschlussabschnitt eine sich in den hohlen Schaft radial öffnende Absaugöffnung hat. Die Absaugvorrichtung hat ein Gebläse, einen Ansaugkopf, einen Kanal von dem Ansaugkopf zu dem Gebläse, einen Staubfilter und einen Sammelbehälter für den an dem Staubfilter abgeschiedenen Staub. Der Ansaugkopf hat einen um eine Arbeitsachse angeordneten rohrförmigen Hohlraum zum Aufnehmen des Anschlussabschnitts des Saugbohrers. In dem Hohlraum ist ein Strömungssensor angeordnet, der eine der Arbeitsachse zugewandte Sensorfläche hat und zum Ausgeben eines Messsignals, das indikativ für einen auf die Sensorfläche auftreffenden Luftstrom ist. Eine Auswertungseinrichtung gibt ein Fehlersignal ansprechend auf das Messsignal aus, wenn das Messsignal für wenigstens eine vorgegebene Dauer (T) geringer als ein Schwellwert ist, und unterdrückt das Fehlersignal, wenn das Messsignal den Schwellwert innerhalb der vorgegebenen Dauer (T) überschreitet. Eine Signalisierungseinrichtung zeigt das Fehlersignals einem Anwender an.

Aus dem Saugbohrer tritt an seinem Anschlussabschnitt ein Luftstrom aus. Der sich drehende Saugbohrer lenkt den Luftstrom alternierend auf den erfindungsgemäß angeordneten Strömungssensor und neben den Strömungssensor. Der Strömungssensor gibt somit ein Messsignal mit alternierender Amplitude aus. Außer der Saugbohrer ist verstopft, dann bleibt das Messsignal konstant. Das generierte Messsignal kann dem Saugbohrer zugeordnet werden.

Eine Ausgestaltung sieht vor, dass die Sensorfläche freie Sicht auf die Arbeitsachse hat. Vorteilhafterweise ist der Abstand der Sensorfläche zu dem Saugbohrer gering. Der Hohlraum hat längs der Arbeitsachse eine vordere kreisförmige Öffnung und eine hintere kreisförmige Öffnung. Ein radialer Abstand der Sensorfläche zu der Arbeitsachse kann geringer als 120 % der Radi der Öffnungen sein.

Eine Ausgestaltung sieht vor, dass die Sensorfläche einen Winkelbereich von weniger als 60 Grad um die Arbeitsachse abdeckt. Der Strömungssensor kann bezüglich der Arbeitsachse wenigstens um 60 Grad von einem Durchstich des Kanals in den Hohlraum entfernt angeordnet ist. Besonders bevorzugt ist eine Anordnung diametral gegenüber dem Durchstich. Die in diesem Bereich geringen in Umlaufrichtung laufenden Luftströme verfälschen in geringem Maß die Messungen der radialen Luftströme.

### KURZE BESCHREIBUNG DER FIGUREN

Die nachfolgende Beschreibung erläutert die Erfindung anhand von exemplarischen Ausführungsformen und Figuren. In den Figuren zeigen:
- Fig. 1: einen Bohrhammer mit Absaugvorrichtung

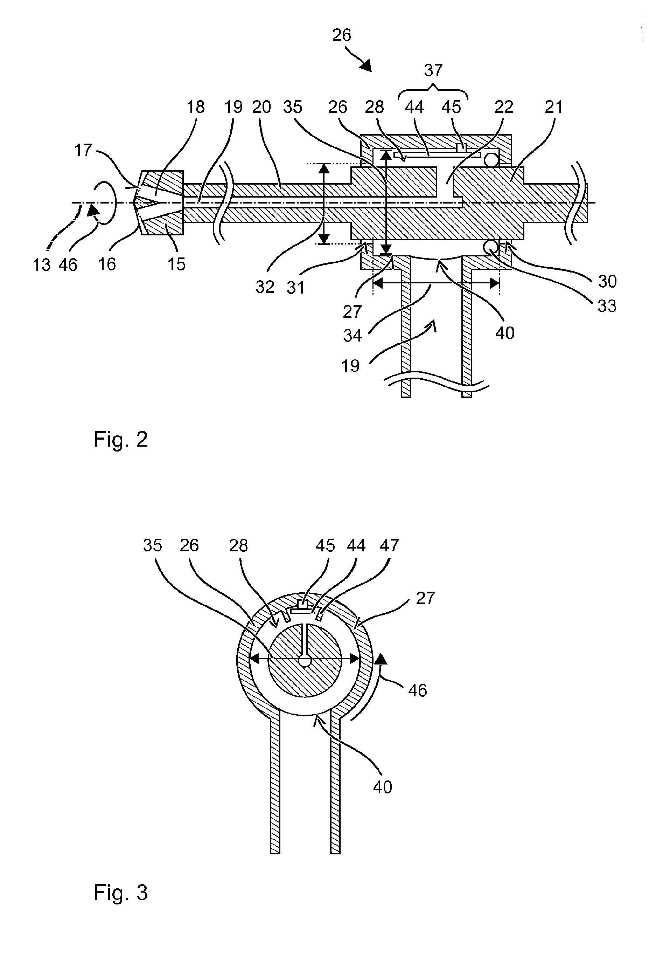

- Fig. 2: eine Detailansicht eines Absaugkopfs der Absaugvorrichtung
- Fig. 3: einen Schnitt durch den Absaugkopf

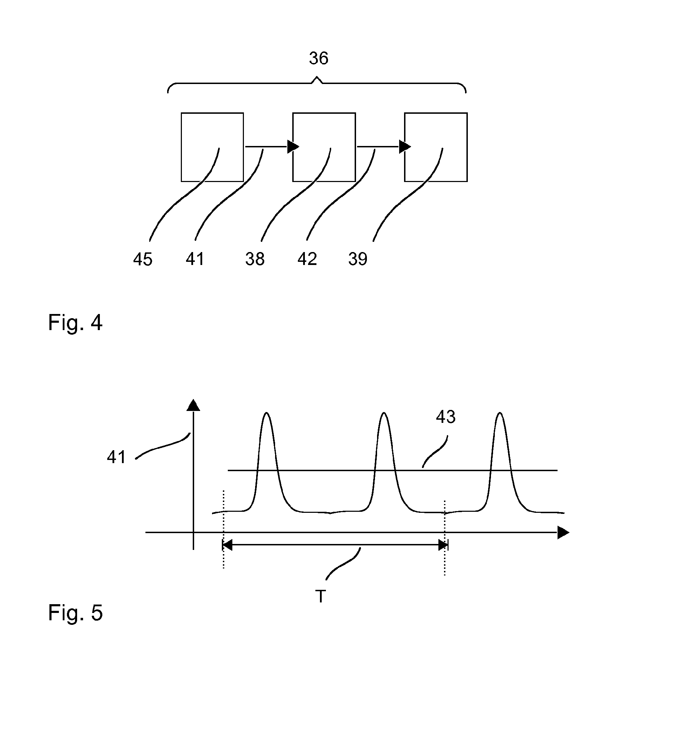

- Fig. 4: einen Darstellung der Auswertungseinrichtung
- Fig. 5: einen Signalverlauf des Messsignals

Gleiche oder funktionsgleiche Elemente werden durch gleiche Bezugszeichen in den Figuren indiziert, soweit nicht anders angegeben.

### AUSFÜHRUNGSFORMEN DER ERFINDUNG

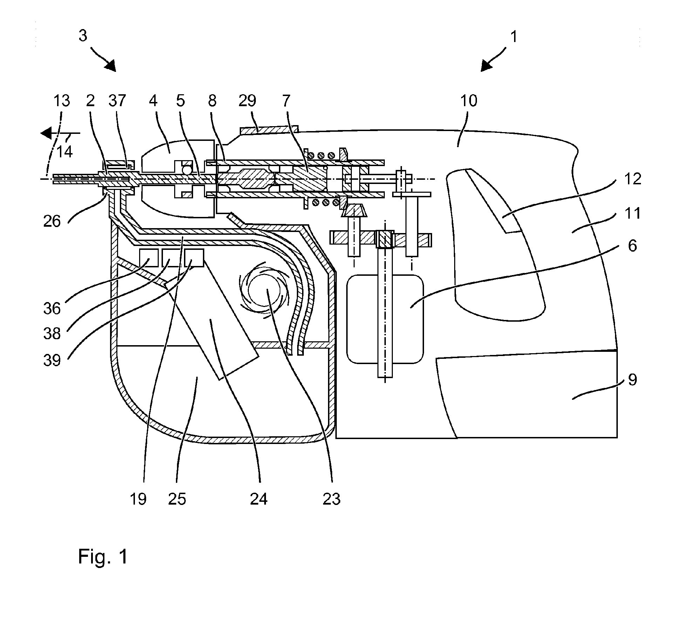

Fig. 1 zeigt einen Bohrhammer **1,** einen Saugbohrer **2** und eine Absaugvorrichtung **3** für den Saugbohrer **2.**

Der Bohrhammer **1** hat eine Werkzeugaufnahme **4,** in welche ein Einsteckende **5** des Saugbohrers **2** eingesetzt ist. Einen primären Antrieb des Bohrhammers **1** bildet ein Elektromotor **6,** welcher ein pneumatisches Schlagwerk **7** und eine Abtriebswelle **8** antreibt. Ein Batteriepaket **9** oder eine Netzleitung versorgen den Elektromotor **6** mit Strom. Der Elektromotor **6,** das Schlagwerk **7** und die weiteren Antriebskomponenten sind in einem Maschinengehäuse **10** angeordnet. Ein Handgriff **11** ist an dem Maschinengehäuse **10** befestigt. Ein Anwender kann den Bohrhammer **1** mittels des Handgriffs **11** führen und mittels eines Systemschalters **12** in Betrieb nehmen. Im Betrieb dreht der Bohrhammer **1** den Saugbohrer **2** kontinuierlich um eine Arbeitsachse **13** und kann dabei den Bohrer **2** in Schlagrichtung **14** längs der Arbeitsachse **13** in einen Untergrund schlagen.

Der Saugbohrer **2** hat einen Bohrkopf **15** mit zwei oder mehreren in Schlagrichtung **14** weisenden stumpfen Schneiden **16.** Die Schneiden **16** sind ausgelegt Gestein per Meißeln zu zerkleinern. Der Bohrkopf **15** hat an seiner Stirnseite **17** zwischen den Schneiden **16** mehrere Ansaugöffnungen **18.** Die Ansaugöffnungen **18** münden in einem Kanal **19** in einem hohlen Schaft **20** des Saugbohrers **2.** Das durch die Schneiden **16** zertrümmerte und zermahlene Gestein wird durch die Ansaugöffnungen **18** aus dem Bohrloch abtransportiert. Der hohle Schaft **20** hat angrenzenden an das Einsteckende **5** einen Anschlussabschnitt **21,** in welchem eine Absaugöffnung **22** radial bis in den Kanal **19** durchsticht. Die Absaugvorrichtung 3 ist an den Anschlussabschnitt **21** angeschlossen und saugt das staubund sandartige Bohrgut an dem Anschlussabschnitt **21** ab.

Die Absaugvorrichtung **3** hat ein Gebläse **23,** einen Staubfilter **24** und einen Sammelbehälter **25.** Das Gebläse **23** beinhaltet beispielsweise einen Elektromotor und ein Lüfterrad. Der Elektromotor wird von dem Batteriepaket **9** des Bohrhammers **1** oder einer separaten Energiequelle versorgt. Das Gebläse **23** ist über einen Kanal **19** mit einem Ansaugkopf **26** verbunden. Der Kanal **19** sticht weitgehend senkrecht zu der Arbeitsachse **13** in die Innenwand **27** des Ansaugkopfs **26** ein. Das Gebläse **23** fördert die staubbeladene Luft aus dem Hohlraum **28** des Ansaugkopfs **26** ab. Der Staubfilter **24** ist in Strömungsrichtung vor dem Gebläse **23** angeordnet. Der Staub wird aus der Luft an dem Staubfilter **24** abgeschieden. Der Sammelbehälter **25** ist in Strömungsrichtung vor und angrenzend an dem Staubfilter **24** angeordnet und fängt den abgeschiedenen Staub auf. Der Sammelbehälter **25** kann aus der Absaugvorrichtung **3** zum Entleeren entnommen werden. Die Absaugvorrichtung **3** kann an dem Maschinengehäuse **10** des Bohrhammers **1** lösbar befestigt werden. Die beispielhafte Absaugvorrichtung **3** hat eine Muffe **29** die auf den Hals des Bohrhammers **1** aufgesetzt wird.

Der Ansaugkopf **26** nimmt den Anschlussabschnitt **21** des Saugbohrers **4** längs der Arbeitsachse **13** auf. Der Ansaugkopf **26** umschließt einen weitgehend zylindrischen und zur Arbeitsachse **13** konzentrischen Hohlraum **28.** Der Hohlraum **28** ist längs der Arbeitsachse **13** in beide Richtungen durch kreisförmige zur Arbeitsachse **13** konzentrische Öffnungen **30, 31** geöffnet. Die beiden Öffnungen **30, 31** schließen bündig mit dem eingesetzten Saugbohrer **2,** d.h. dessen Anschlussabschnitt **21** ab. Die Durchmesser **32** der Öffnungen **30, 31** sind entsprechend gleich dem Außendurchmesser des Anschlussabschnitts **21.** Es können Dichtringe **33** an den Öffnungen **30** vorgesehen sein, welche einen luftdichten Abschluss der Öffnungen **30** mit dem Anschlussabschnitt **21** verbessern. Der Abstand **24** der beiden Öffnungen **30, 31** und damit die Länge **34** des Hohlraums **28,** ist größer als die Hubbewegung des Saugbohrers **4** beim schlagenden Betrieb. Die maximale Hubbewegung ist durch das Einsteckende **5** vorgegeben. Der Hohlraum **28** ist vorzugsweise zwischen 1 cm und 3 cm lang. Der Hohlraum **28** hat einen Innendurchmesser **35,** der größer als der Durchmesser **32** der Öffnungen **30, 31** ist. Der Anschlussabschnitt **21** ist berührungsfrei zu der radialen Innenwand **27** des Ansaugkopfs. Luft kann die zwischen den Öffnungen **30, 31** abgeschlossene Mantelfläche des Anschlussabschnitts **21** umspülen. Die staubbeladene Luft kann damit unabhängig von der momentanen Winkelstellung des Saugbohrers **4** aus der Absaugöffnung **22** in den Hohlraum **28** eintreten. Die Innenwand **27** ist vorzugsweise zylindrisch.

Die Absaugvorrichtung 3 hat eine Überwachungseinrichtung **36,** welche dem Anwender auf einen durch Bohrgut verstopften Saugbohrer **3** hinweist. Die Überwachungseinrichtung **36** beinhaltet einen Strömungssensor **37** im Ansaugkopf **26,** eine Auswertungseinrichtung **38** für den Strömungssensor **37** und eine Signalisierungseinrichtung **39.**

Der Strömungssensor **37** ist in dem Hohlraum **28** des Ansaugkopfs **26** angeordnet. Der Strömungssensor **37** ist der Arbeitsachse **13** zugewandt. Der Strömungssensor **37** ist vorzugsweise diametral gegenüberliegend zu dem Durchstich **40** des Kanals **19** angeordnet, oder bezogen auf die Arbeitsachse **13** um wenigstens um 60 Grad von dem Durchstich **40** entfernt. Der Strömungssensor **37** spricht an, wenn ein Luftstrom in radialer Richtung auf den Strömungssensor **37** trifft. Der Strömungssensor **37** deckt einen begrenzten Winkelbereich um die Arbeitsachse **13** ab, z.B. weniger als 60 Grad. Der aus der Absaugöffnung **22** des Saugbohrers **2** austretende Luftstrom trifft bei dem drehenden Saugbohrer **2** periodisch alternierend auf den Strömungssensor **37** und neben den Strömungssensor **37.** Der Strömungssensor **37** gibt ein entsprechendes periodisches Messsignal **41** aus.

Die Auswertungseinrichtung **38** wertet das Messsignal **41** des Strömungssensors **37** in Hinblick auf das Auftreten der Periodizität aus. Die Auswertungseinrichtung **38** meldet einen Fehler **42,** wenn das Messsignal für eine vorgegeben Dauer T einen konstanten Pegel aufweist. Die vorgegebene Dauer T ist größer als die typische Dauer für eine vollständige Umdrehung des Saugbohrers **4** um die Arbeitsachse **13.** Die Dauer liegt beispielsweise im Bereich von 100 ms bis 1 s. Beispielsweise vergleicht die Auswertungseinrichtung **38** das Messsignal **41** mit einem Schwellwert **43.** Das Messsignal **41** muss in der vorgegebenen Dauer T wenigstens einmal größer als der Schwellwert **43** und einmal geringer als der Schwellwert **43** sein. Ein Zeitnehmer wird beispielsweise jedes Mal zurückgesetzt, wenn das Messsignal **41** den Schwellwert **43** überschreitet, d.h. der Luftstrom auf das Fähnchen **44** trifft. Bleibt das Zurücksetzen bis zu der Dauer T aus, wird das Fehlersignal **42** ausgegeben.

Das Fehlersignal **42** wird mit einem Verstopfen des Saugbohrers **2** durch Bohrgut assozüert. Obwohl das Gebläse **23** Luft aus dem Ansaugkopf **26** ansaugt, tritt keine Luft aus der Absaugöffnung **22** des Saugbohrers **2** aus. Das Fehlersignal **42** kann dem Anwender mittels einer Anzeige **39** oder akustisch mitgeteilt werden. Alternativ oder zusätzlich übermittelt die Auswertungseinrichtung **38** dem Bohrhammer **1** das Fehlersignal, welcher darauf seinen Elektromotor **6** abschaltet.

Der Strömungssensor **37** hat beispielsweise ein Fähnchen **44,** dessen Sensorfläche parallel zu der Arbeitsachse **13** und der Arbeitsachse **13** zugewandt ist. Das Fähnchen **44** wird durch den Luftstrom in radialer Richtung ausgelenkt. Der Fähnchen **44** ist an einem piezoelektrischen Sensor **45** aufgehängt. Die Auslenkung des Fähnchens **44** erzeugt einen Spannungspuls in dem Sensor **45.** Das Fähnchen **44** ist in Umfangsrichtung **46** schmal und erstreckt sich längs der Arbeitsachse **13** über wenigstens die Hälfte der Länge **34** des Hohlraums **28.** Das Fähnchen **44** hat vorzugsweise einen geringen Abstand zu dem Saugbohrer **3.** Beispielsweise ist der Abstand zu der Arbeitsachse **13** geringer als 55 % des Durchmessers des Anschlussabschnitts **21** des Saugbohrers **4.** Anstelle des Fähnchens **44** und des piezoelektrischen Sensors **45** können auch andere Sensorflächen und Aufnehmer verwendet werden, deren Messsignal **41** sich beim Auftreffen des Luftstroms in radialer Richtung auf die Sensorfläche **44** ändert. Beispielsweise kann eine Druckdose mit einer der Arbeitsachse **13** zugewandten Membran oder ein flächiger piezoelektrischer Drucksensor verwendet werden. Die Sensorfläche **44** ist in geringem Abstand zu dem Saugbohrer **3** angeordnet. Der Strömungssensor **37** kann in Umfangsrichtung **46** durch Wände **47** abgeschirmt sein.

Die Überwachungseinrichtung **36** kann ein Steuersignal von dem Bohrhammer **1** empfangen, welches angibt wenn die Werkzeugaufnahme **4** und damit der Saugbohrer **3** gedreht wird. Das Steuersignal kann beispielsweise auch die Drehzahl übermitteln. Die Überwachungseinrichtung **36** wird ansprechend auf das Steuersignal aktiviert, wenn sich die Werkzeugaufnahme **4** dreht. Die Dauer T kann in Abhängigkeit der Drehzahl festgelegt werden, z.B. liegt die Dauer T zwischen 150 % und 300 % dem Inversen der Drehzahl.

## Patentansprüche

1. Absaugvorrichtung (3) für einen Saugbohrer (3), der einen hohlen Schaft (20) und an einem Anschlussabschnitt (21) eine sich in den hohlen Schaft (20) radial öffnende Absaugöffnung (22) hat, mit:
einem Gebläse (23),
einem Ansaugkopf (26), der einen um eine Arbeitsachse (13) angeordneten rohrförmigen Hohlraum (28) zum Aufnehmen des Anschlussabschnitts (21) aufweist,
einem Kanal (19), der den Hohlraum (28) mit dem Gebläse (23) verbindet,
einem in dem Kanal (19) angeordneten Staubfilter (24) und
einem Sammelbehälter (25) für an dem Staubfilter (24) abgeschiedenem Staub,
**gekennzeichnet durch**
einen Strömungssensor (37), der eine in dem Hohlraum (28) angeordnete und der Arbeitsachse (13) zugewandte Sensorfläche (44) hat, zum Ausgeben eines Messsignals (41), das indikativ für einen auf die Sensorfläche (44) auftreffenden Luftstrom ist,
eine Auswertungseinrichtung (38) zum Ausgeben eines Fehlersignals (42) ansprechend auf das Messsignal (41), wenn das Messsignal (41) für wenigstens eine vorgegebene Dauer (T) geringer als ein Schwellwert (43) ist, und zum Unterdrücken des Fehlersignals (42), wenn das Messsignal (41) den Schwellwert (43) innerhalb der vorgegebenen Dauer (T) überschreitet, und
eine Signalisierungseinrichtung (39) zum Anzeigen des Fehlersignals (42) für einen Anwender.

2. Absaugvorrichtung (3) nach Anspruch 1, **dadurch gekennzeichnet, dass** die Sensorfläche (44) freie Sicht auf die Arbeitsachse (13) hat.

3. Absaugvorrichtung (3) nach Anspruch 1 oder 2, **dadurch gekennzeichnet, dass** der Hohlraum (28) längs der Arbeitsachse (13) eine vordere kreisförmige Öffnung (30) und eine hintere kreisförmige Öffnung (31) aufweist, und ein radialer Abstand der Sensorfläche (44) zu der Arbeitsachse (13) geringer als 120 % der Radi der Öffnungen (30, 31) ist.

4. Absaugvorrichtung (3) nach einem der vorhergehenden Ansprüche, **dadurch gekennzeichnet, dass** die Sensorfläche (44) einen Winkelbereich von weniger als 60 Grad um die Arbeitsachse (13) abdeckt.

5. Absaugvorrichtung (3) nach einem der vorhergehenden Ansprüche, **dadurch gekennzeichnet, dass** der Strömungssensor (37) bezüglich der Arbeitsachse (13) wenigstens um 60 Grad von einem Durchstich (40) des Kanals (19) in den Hohlraum (28) entfernt angeordnet ist.

6. Bohrhammer (1) mit
einem Motor (6),
einer Werkzeugaufnahme (4) zum Aufnahmen eines Saugbohrers (4) auf der Arbeitsachse (13),
einem motorgetriebenen pneumatischen Schlagwerk (7) und
einer Absaugvorrichtung (3) nach einem der vorhergehenden Ansprüche 1 bis 5.

7. Steuerungsverfahren für eine Absaugvorrichtung (3) nach den Ansprüchen 1 bis 6 mit den Schritten:
Betreiben des Gebläse (23) zum Ansaugen von Luft aus dem Hohlraum (28) in dem hülsenförmigen Ansaugkopf (26),
Erfassen eines Luftstroms, der in radialer Richtung auf die Sensorfläche (44) des Strömungssensors (37) in dem Hohlraum (28) trifft,
Auslösen eines Fehlersignals (42), wenn das von dem Strömungssensor (37) als Maß für den Luftstrom ausgegebene Messsignal (41) für eine Dauer T durchgehend unterhalb eines Schwellwerts (43) bleibt, und Unterdrücken des Fehlersignals (42),
wenn das Messsignal (41) innerhalb der Dauer T zeitweise geringer als der Schwellwert (43) und zeitweise größer als der Schwellwert (43) ist.
